# EUROPEAN PATENT APPLICATION

(11) **EP 2 874 086 A1**
(43) Date of publication of application: **20.05.2015**
(21) Application number: 14192887.9
(22) Date of filing: 12.11.2014
(51) Int. Cl.: G06F 21/00, H04L 29/06, H04W 12/06, H04W 52/02

(54) **Communication apparatus, control method of communication apparatus, communication system, and program**

(30) Priority: 13.11.2013 JP 2013235294
(71) Applicant: CANON KABUSHIKI KAISHA, Ohta-ku Tokyo 146-8501 (JP)
(72) Inventor: Amano, Ryosuke, Ohta-ku, Tokyo (JP)
(74) Representative: Foxon, Rachel Siobhan

(57) **Abstract**

A communication apparatus (101) includes communication means (208) for executing wireless communication by a first communication scheme; receiving means (520) for receiving first information, relating to communication processing executable by a first other communication apparatus (102) through wireless communication by a different second communication scheme, from the first other communication apparatus via the communication means and for receiving second information, relating to communication processing executable by a second other communication apparatus (103) through the wireless communication by the second communication scheme, from the second other communication apparatus via the communication means; and control means (510) for controlling the communication means to transmit a connection parameter required for executing the wireless communication between the first and second other communication apparatuses by the second communication scheme, and to transmit a request for the communication processing indicated by the first information from the first other communication apparatus, to the second other communication apparatus.

## Description

### BACKGROUND OF THE INVENTION

### Field of the Invention

The present invention relates to a communication technology.

### Description of the Related Art

In recent years, short-range wireless communication, such as NFC (Near Field Communication), IrDA (Infrared Data Association), or TransferJet (registered trademark), has begun to be used for mobile phones. For example, when a user merely performs an operation to cause apparatuses to approach each other, a communication path of a one-to-one correspondence is established by the short-range wireless communication, and data can be transmitted and received between the apparatuses. Also, there is a technology that hands over such short-range wireless communication to a different wireless communication scheme, such as wireless LAN (IEEE 802.11 series) or Bluetooth (registered trademark) (Japanese Patent Laid-Open No. 2011-193474).

Further, there is a technology that transmits and receives connection information of a short-range wireless communication scheme between stationary apparatuses through NFC communication by using a portable relay apparatus (Japanese Patent Laid-Open No. 2006-135791). When a user merely causes a relay apparatus to successively approach to at least two apparatuses serving as subjects for connection by a short-range wireless communication scheme, the subject apparatuses can be connected to each other by the short-range wireless communication scheme.

Also, there is a communication protocol (service discovery protocol) for searching a service provided by other communication apparatus and providing notification about a service provided by a relevant apparatus to other communication apparatus through a network. For example, Simple Service Discovery Protocol (SSDP) and Multicast Domain Name System (mDNS) are examples of the communication protocol.

When subject apparatuses for executing a service are connected by wireless LAN by using the above-described relay apparatus and the service is executed between the subject apparatuses, the aforementioned service discovery protocol is typically executed after the connection by the wireless LAN. Hence, the subject apparatuses recognize that a desired communication service cannot be executed, after the subject apparatuses transmit and receive connection information of the wireless LAN through the NFC communication and are connected by the wireless LAN. Owing to this, although the connection processing of the wireless LAN has been executed, when the service discovery protocol is attempted to be executed after the connection by the wireless LAN, the desired communication service may not be executed with a connected communication partner. Unnecessary connection processing for the wireless LAN may arise.

### SUMMARY OF THE INVENTION

The present invention in its first aspect provides a communication apparatus as specified in claims 1 to 10.

The present invention in its second aspect provides a control method of a communication apparatus as specified in claim 11.

The present invention in its third aspect provides a program as specified in claim 12.

Further features of the present invention will become apparent from the following description of exemplary embodiments with reference to the attached drawings.

### BRIEF DESCRIPTION OF THE DRAWINGS

Fig. 1 is an illustration exemplarily showing a system configuration according to an embodiment.
Fig. 2 is an illustration showing an example of a hardware configuration of a communication apparatus (smartphone) according to the embodiment.
Fig. 3 is an illustration showing an example of a hardware configuration of a communication apparatus (digital television) according to the embodiment.
Fig. 4 is an illustration showing an example of a hardware configuration of a communication apparatus (printer) according to the embodiment.
Fig. 5 is an illustration showing an example of a functional block configuration of the communication apparatus (smartphone) according to the embodiment.
Fig. 6 is an illustration showing an example of a functional block configuration of the communication apparatus (digital television) according to the embodiment.
Fig. 7 is an illustration showing an example of a functional block configuration of the communication apparatus (printer) according to the embodiment.
Fig. 8 is an illustration describing an operational flow of the communication apparatus (smartphone) according to first and second embodiments.
Fig. 9 is an illustration exemplarily describing a communication sequence among the smartphone, the digital television, and the printer according to the first embodiment.
Fig. 10 is an illustration exemplarily describing a communication sequence among the smartphone, the digital television, and the printer according to the second embodiment.

### DESCRIPTION OF THE EMBODIMENTS

An embodiment described below aims at sharing information of a service between apparatuses.

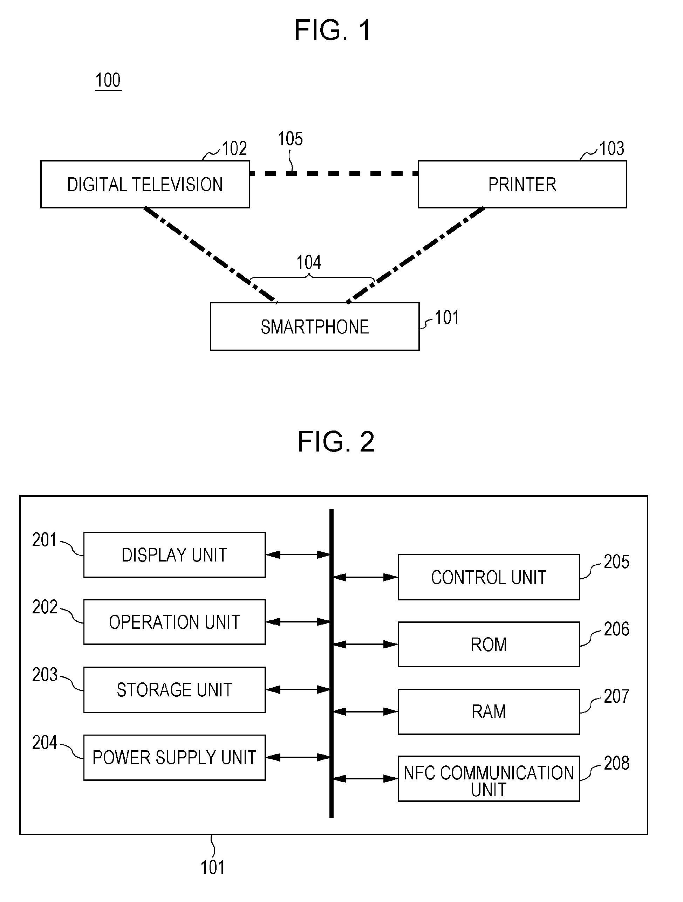

A communication apparatus and a communication system according to this embodiment are described in detail below with reference to the drawings. Fig. 1 is an illustration of an apparatus configuration of a system 100 expected in this embodiment (described below). Reference signs 101, 102, and 103 denote communication apparatuses according to this embodiment. Reference sign 101 denotes a smartphone, 102 denotes a digital television, and 103 denotes a printer. The smartphone 101 can make communication (communicate) with the digital television 102 or the printer 103 by using NFC communication 104. In this embodiment, the NFC communication 104 executes bidirectional communication. However, communication may be made such that the smartphone 101 operates as a reader/writer and executes reading and writing with respect to NFC tags of the digital television 102 and the printer 103. Also, the digital television 102 and the printer 103 can mutually make communication (communicate) by using wireless LAN communication 105.

Next, Fig. 2 is an illustration showing a hardware configuration of the smartphone 101.

The smartphone 101 includes a display unit 201, an operation unit 202, a storage unit 203, a power supply unit 204, a control unit 205, a ROM 206, a RAM 207, and an NFC communication unit 208.

The display unit 201 is, for example, an LCD or an OLED display, has a function of outputting visually recognizable information, and displays a user interface (UI) according to an application. The operation unit 202 has a function of operating the communication apparatus when a user performs various inputs and so forth thereon. The storage unit 203 is formed of, for example, an HDD, and stores and manages various data, such as wireless communication network information, data transmission/reception information, and image data. The power supply unit 204 is, for example, a battery, keeps a power source for operating the entire apparatus, and supplies electric power to respective units of hardware. The control unit 205 is, for example, a CPU (Central Processing Unit), and controls operations of respective components of the smartphone 101. The ROM 206 stores a control command (or a sequence of control commands), i.e., a program. Various operations (described later) are implemented when the control unit 205 executes a control program stored in the ROM 206. The RAM 207 is used for a work memory when a program is executed, and temporary storage of data. Reference sign 208 denotes the NFC communication unit that executes the NFC communication 104. The NFC communication unit 208 executes wireless communication compliant with NFC (Near Field Communication). Also, the NFC communication unit 208 automatically establishes the NFC communication 104 when the NFC communication unit 208 detects an apparatus available for communication within a communication range. The NFC communication unit 208 executes the wireless communication compliant with NFC. However, any communication scheme may be used as long as the communication scheme has a shorter communication range than that of the communication scheme used by the wireless LAN communication 105. Also, the NFC communication unit 208 may use any communication scheme as long as the communication scheme has a lower communication speed than that of the communication scheme used by the wireless LAN communication 105. As an alternative, the NFC communication unit 208 may, for example, be replaced by a communication unit that can execute communication by Bluetooth Low Energy defined by Bluetooth 4.0.

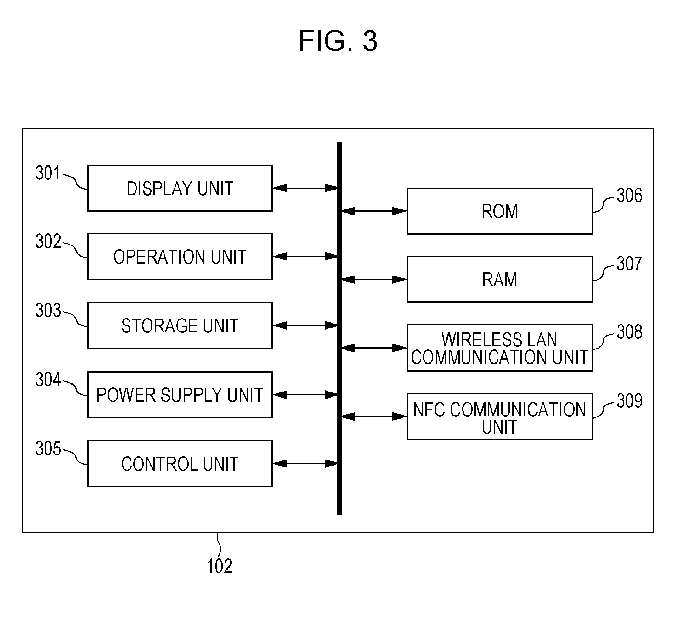

Next, Fig. 3 is an illustration showing a hardware configuration of the digital television 102. The digital television 102 includes a wireless LAN communication unit 308 that executes the wireless LAN communication 105. The wireless LAN communication unit 308 executes wireless communication compliant with IEEE 802.11 series. In this embodiment, the wireless LAN communication unit 308 executes the wireless communication compliant with IEEE 802.11 series; however, other communication scheme such as Bluetooth (registered trademark) may be used. Other configuration parts are identical with those of the smartphone 101, and hence the description is omitted.

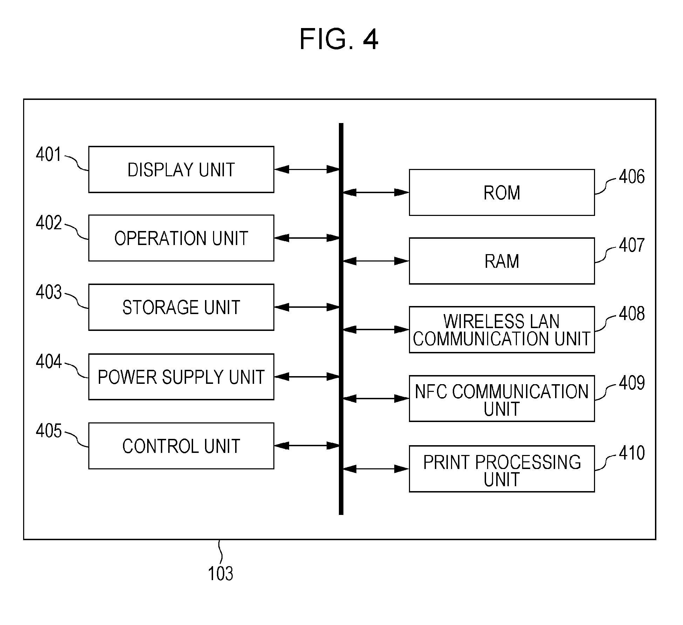

Next, Fig. 4 is an illustration showing a hardware configuration of the printer 103. The printer 103 includes a print processing unit 410. The print processing unit 410 prints image data stored in a storage unit 403. Other configuration parts are identical with those of the digital television 102, and hence the description is omitted.

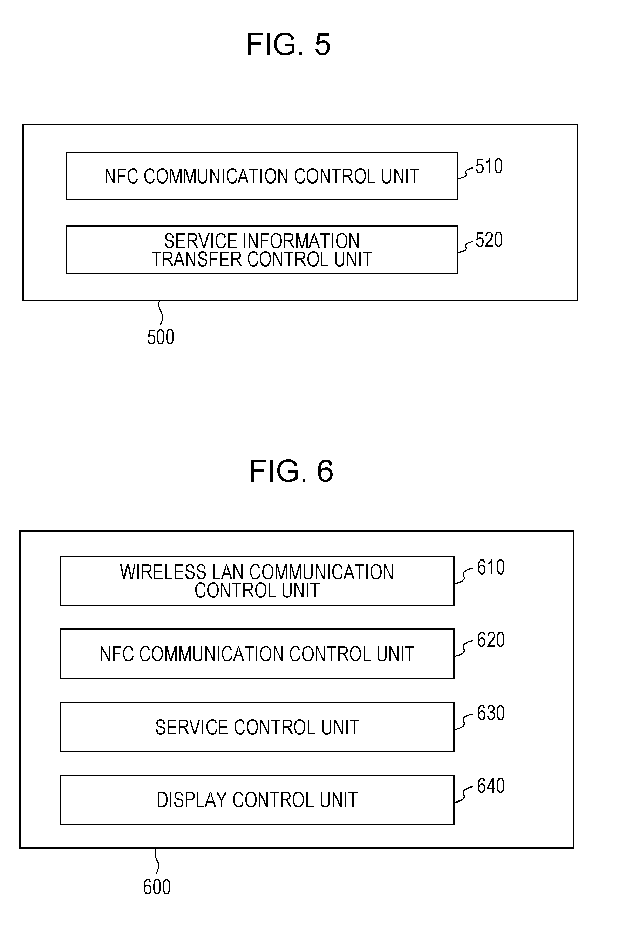

Next, functional block diagrams of the smartphone 101, the digital television 102, and the printer 103 are described with reference to Figs. 5, 6, and 7. In this embodiment, functional blocks of the smartphone 101, the digital television 102, and the printer 103 are implemented when CPUs execute control programs. The control programs are stored in the respective ROM 206, ROM 306, and ROM 406 of the smartphone 101, the digital television 102, and the printer 103. The functional blocks shown in Figs. 5, 6, and 7 are implemented when the programs are executed by the respective control unit 205, control unit 305, and control unit 405 of the smartphone 101, the digital television 102, and the printer 103. The respective functions are implemented when the control units 205, 305, and 405 execute control of respective units of hardware, and arithmetic operation and processing of information, in accordance with the control programs. Alternatively, the functions included in each functional block may be partly or entirely formed of hardware. In this case, the functions included in each functional block are formed of an ASIC (application specific integrated circuit).

Fig. 5 is a functional block diagram (500) of the smartphone 101. The smartphone 101 includes an NFC communication control unit 510 and a service information transfer control unit 520.

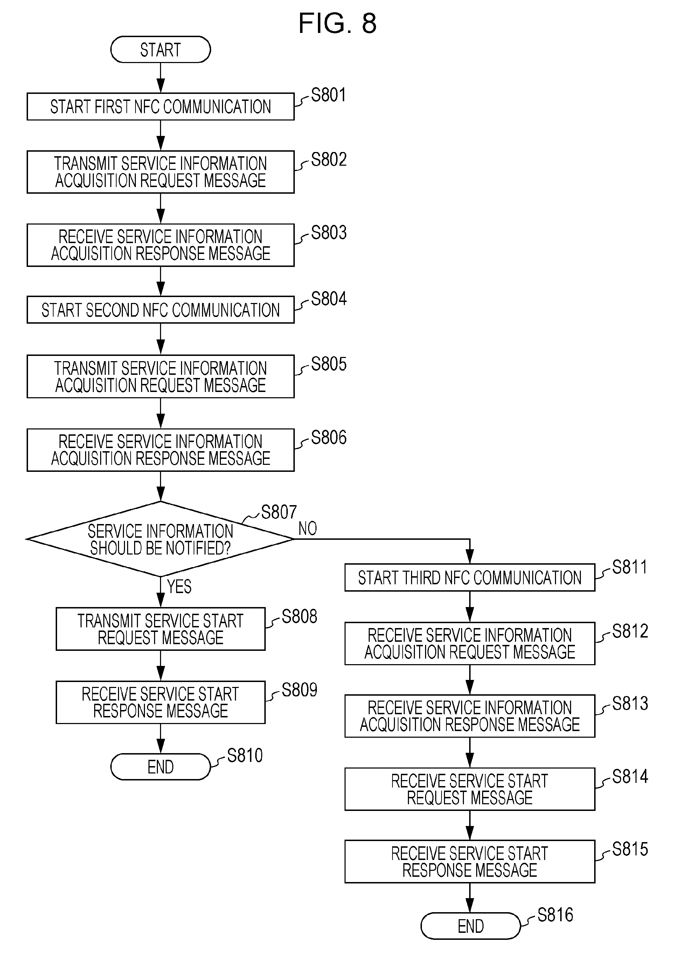

The NFC communication control unit 510 is a processing unit that controls the NFC communication executed through the NFC communication unit 208. The service information transfer control unit 520 is a processing unit that relays service identifier information (described later) between two other apparatuses by the NFC communication control unit 510 while the smartphone 101 serves as a relay apparatus. The details of a processing content of the service information transfer control unit 520 are described with reference to a flowchart in Fig. 8.

Fig. 6 is a functional block diagram (600) of the digital television 102. The digital television 102 includes a wireless LAN communication control unit 610, an NFC communication control unit 620, a service control unit 630, and a display control unit 640.

The wireless LAN communication control unit 610 is a processing unit that controls the wireless LAN communication executed through the wireless LAN communication unit 308. Also, the wireless LAN communication control unit 610 has an STA function that operates as a station in an infrastructure mode of wireless LAN, and an AP function that operates as an access point.

The NFC communication control unit 620 is a processing unit that controls the NFC communication executed through an NFC communication unit 309. The service control unit 630 is a processing unit that manages service information of an external device by using the wireless LAN communication, and executes the service. In this case, the service is communication processing that is executed by using communication. The service control unit 630 manages an identifier of a service (communication service), an execution procedure of the service corresponding to the identifier, option information of the service, and the like, as service information. It is assumed that the digital television 102 in this embodiment can execute an "image transfer service." The display control unit 640 is a processing unit that controls a display unit to display data.

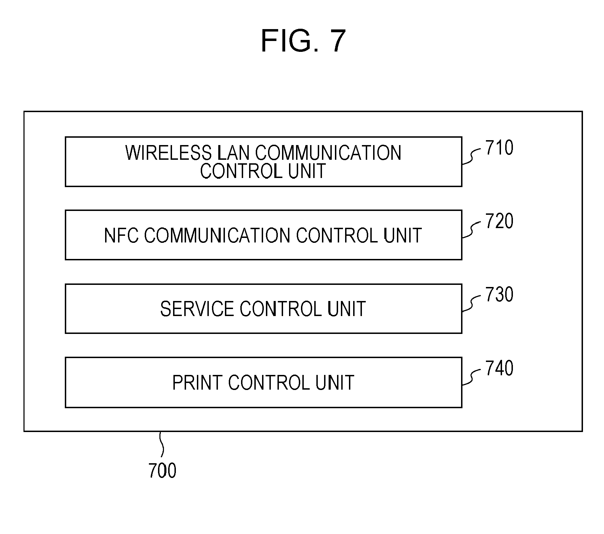

Fig. 7 is a functional block diagram (700) of the printer 103. The printer 103 includes a wireless LAN communication control unit 710, an NFC communication control unit 720, a service control unit 730, and a print control unit 740.

The wireless LAN communication control unit 710 is a processing unit that controls the wireless LAN communication executed through the wireless LAN communication unit 308. Also, the wireless LAN communication control unit 710 has an STA function of wireless LAN and an AP function. The NFC communication control unit 720 is a processing unit that controls the NFC communication executed through the NFC communication unit 309. The service control unit 730 is a processing unit that manages information of a service that can be provided by the printer 103 to an external device (in particular, a service provided by the printer in response to a request received from an external device) through the wireless LAN communication control unit 710, and executes the service. The service control unit 730 manages an identifier of a service (communication service), an execution procedure of the service corresponding to the identifier, option information of the service, and the like, as service information. It is assumed that the printer 103 in this embodiment can execute a "print service." The print control unit 740 is a functional unit that controls print processing by the print processing unit 410. The service control unit 730 controls the print control unit 740 in response to a request from an external device, and can print print data received from the external device.

An operation of the communication system having the above-described configuration is described.

### First Embodiment

An operation procedure of the smartphone 101 according to a first embodiment is described with reference to the flowchart in Fig. 8.

The flowchart in Fig. 8 shows the operation procedure of the smartphone 101 when the smartphone 101 approaches the digital television 102 and when the smartphone 101 approaches the printer 103 by an operation of a user.

When the approach of the NFC communication unit 309 of the digital television 102 is detected, the NFC communication control unit 510 of the smartphone 101 establishes communication by NFC with the digital television 102 (S801). Then, the control unit 205 of the smartphone 101 transmits a service information acquisition request message by the NFC communication unit 208 to the digital television 102 (S802). The service information acquisition request message in this case is a message that requests transmission of a service information acquisition response message (described later) to (by) the counter apparatus of the NFC communication 104.

Then, the smartphone 101 receives the service information acquisition response message including identifier information of a service by (at) the NFC communication unit 208 from the digital television 102 (S803). It is assumed that an identifier of a service in this case is an integer value uniquely associated with a service having an individually determined specification. The service information acquisition response message may include additional information or the like in addition to the identifier of the service. For example, the additional information of the service may be the encode form (in other words the encoding type) and resolution of a transferred image file. Also, the service information acquisition response message may include information indicative of the expiration date of information of a communication service. Also, the service information acquisition response message may include information of a wireless communication interface that is used when a service is executed. The information of the wireless communication interface is information indicative of a communication scheme by which connection is desired, and is information indicative of wireless LAN or Bluetooth (registered trademark). Also, the information of the wireless communication interface may include a connection parameter required for connection by a communication scheme, by which connection is desired, and which is different from NFC. The connection parameter is information for connection with a network constructed such that the digital television 102 serves as an access point. The connection parameter includes all or at least one of a SSID (Service Set Identifier), an encryption key, an encryption method, an authentication key, an authentication method, a Passphrase, and a MAC address of the printer 103.

Also, the service information acquisition response message may include a UUID (Universally Unique Identifier), a model name, and an apparatus name of the digital television 102. Also, the service information acquisition response message may include information indicative of a time-out time. If the service is not started or if the connection by the communication scheme desired by the information of the wireless communication interface is not started within a time indicated by the time-out time, the digital television 102 invalidates the service information acquisition response message. That is, if a predetermined time, which is the time-out time, has elapsed since the smartphone 101 has acquired the service information acquisition response message, the service information included in the service information acquisition response message is not transferred to (an)other apparatus.

If the service information acquisition response message is invalidated, the digital television 102 does not provide the service, or does not execute the connection by the communication scheme desired by the information of the wireless communication interface. Also, even if the time-out time is not included in the service information acquisition response message, a predetermined time may be set as a time-out time. Also, the service information acquisition response message may include information indicative of whether secondary distribution is executable or not for part or the entirety of the content of the service information acquisition response message. The purpose of use of the information indicative of whether the secondary distribution is executable or not is described later. In this embodiment, the identifier information of the service is acquired by using the service information acquisition request message and the service information acquisition response message; however, the service information acquisition request message may be omitted. For example, if the NFC communication control unit 510 operates as a reader/writer, and the NFC communication control unit 620 operates as an NFC tag, information corresponding to the service information acquisition request message may be acquired by reading the NFC tag.

In this embodiment, it is described that identifier information of a single service is included in the service information acquisition response message; however, identifier information of a plurality of services may be included.

If a service provided by the digital television 102 is not present (so if the digital television cannot provide any service), it is assumed that no identifier information of a service is included (present) in the service information acquisition response message from the digital television 102. If identifier information of a service is included in the received service information acquisition response message, the smartphone 101 stores the information included in the received service information acquisition response message, in the storage unit 203.

Next, when the approach of an NFC communication unit 409 of the printer 103 is detected, the NFC communication control unit 510 of the smartphone 101 establishes communication by NFC with the printer 103 (S804). If the communication by NFC cannot be established with the printer 103 even when the time-out time elapses (before the time-out time elapses), the content of the service information acquisition response message received in S803 may be partly or entirely deleted from the storage unit 203. Alternatively, control may be made such that other apparatus which has started the NFC communication after the time-out time elapses is not notified about the content of the service information acquisition response message.

The control unit 205 of the smartphone 101 transmits a service information acquisition request message by the NFC communication unit 208 to the printer 103 (S805). Then, the control unit 205 receives a service information acquisition response message from the printer 103, and stores the content of the message in the storage unit 203 (S806). As described above, the service information acquisition response message may include additional information of the service, information of a wireless communication interface, information indicative of a time-out time, information indicative of whether secondary distribution is executable or not, and the like, in addition to the identifier of the service. If the user incorrectly causes the smartphone 101 to approach the digital television 102 again and the NFC communication 104 is established in S804, the processing from S801 may be executed again, and then the NFC communication 104 with the printer 103 may be established. Alternatively, if the NFC communication 104 is established with the digital television 102 again, the content of the received service information acquisition response message may be deleted from the storage unit 203. Still alternatively, control may be made such that an apparatus other than the digital television 102 is not notified about the content of the service information acquisition response message. As a method of detecting the establishment of the NFC communication 104 with the digital television 102 again in S804, UUID received in S803 and S806 may be used. That is, if UUID acquired by the first NFC is equivalent to UUID acquired by the second NFC communication, the smartphone 101 recognizes that the NFC communication is executed with the same apparatus again. Alternatively, the establishment of the NFC communication 104 with the digital television 102 again may be detected by a method other than the aforementioned method.

Then, the smartphone 101 judges whether or not the smartphone 101 requests the printer 103 to start the service provided by the digital television 102 (S807). To be specific, in S803, if the identifier information of a service is included in the service information acquisition response message received from the digital television 102, it is judged that the start of the service should be requested (YES in S807). If not, it is judged that the start of the service should not be requested (NO in S807). In this embodiment, the judgment in S807 is made depending on whether or not the identifier information of a service is included in the service information acquisition response message received from the digital television 102; however, the method may be (an)other method. To be specific, if the identifier information of a service is received only from the digital television 102 but the identifier information of a service is not received from the printer 103, it is judged that the start of the service provided by the digital television 102 should be requested to the printer 103. Otherwise, it may be judged that the start of the service should not be requested. Further, if the identifier information of a services is received from the digital television 102 and the printer 103 and if a plurality of services can be executed between the digital television 102 and the printer 103, the display unit 201 may provide displaying for (a display) allowing the user to select a service to be executed, and notification about the identifier of the service selected by the user may be provided to a communication partner by processing in S811 and later (described later). Also, the smartphone 101 may cause the display unit 201 to provide displaying (a display) for allowing the user to select a service to be executed from among executable services between the digital television 102 and the printer 103, and notification about the identifier of the service selected by the user may be provided to a communication partner by processing in S811 or later (described later). Also, determination may be made based on information relating to whether relay of service information included in the service information acquisition response message received from the digital television 102 is permitted or rejected.

If it is judged that the start of the service should be requested to the printer 103 (YES in S807), the smartphone 101 transmits a service start request message by the NFC communication unit 208 to the printer 103 (S808). The service start request message in this case is a message that requests start of a service to the communication partner, and includes at least identifier information of a service among (from) information included in the service information acquisition response message received from the digital television 102 in S803. The service start request message may include additional information of the service, information of a wireless communication interface, information indicative of a time-out time, information indicative of whether secondary distribution is executable or not, and the like, in addition to the identifier of the service.

Then, the smartphone 101 receives a service start response message including information indicative of whether the service is executable or not by the NFC communication unit 208 from the printer 103 (S809), and ends the processing (S810). In processing in S809, if the service is executable, the printer 103 transmits a service start response message including information included in the service start request message notified in S808 to the smartphone 101. If the service is not executable, an empty service start response message is transmitted. As another method, an integer value indicative of whether the service is executable or not may be included in the service start response message. Also, the smartphone 101 may be notified of whether the service is executable or not by other method. In this embodiment, the notification is made for the identifier information of the service and whether the service is executable or not by using the service start request message and the service start response message; however, the service start request message may be omitted. For example, if the NFC communication control unit 510 operates as a reader/writer, and the NFC communication control unit 620 operates as an NFC tag, the start of the service may be requested by writing information corresponding to a service start request message in the NFC tag. In this embodiment, the printer 103 provides notification about the service start response message including whether the service is executable or not to the smartphone 101; however, the service start response message may not include whether the service is executable or not. After the processing in S809, if the smartphone 101 is notified (about) that the service is not executable from the printer 103, the display unit 201 may display that the service is not executable. Further, the smartphone 101 may urge the user by using the display unit 201 to cause the smartphone 101 to approach other apparatus to establish the NFC communication 104, and may return to the processing in S804. After the processing in S809, if the smartphone 101 is notified (about) that the service is not executable from the printer 103, the smartphone 101 may delete information relating to the service stored in the storage unit 203. Alternatively, control may be made such that other apparatus is not notified about the content of the service information acquisition response message. After the processing in S809, whether the processing is transited to the processing in S811 or not may be switched in accordance with the information indicative of whether secondary distribution is executable or not included in the service information acquisition response message received from the digital television 102.

If it is judged that start of the service should not be requested (NO in S807), the NFC communication control unit 510 of the smartphone 101 disconnects the NFC communication with the printer 103 without NFC communication being further made with the printer 103. Then, the smartphone 101 waits for establishment of NFC communication with the digital television 102. The smartphone 101 may provide displaying (a display) for urging the user to make the NFC communication with the digital television 102 again. When the approach of the smartphone 101 with the NFC communication unit 309 of the digital television 102 is detected, the communication by NFC with the digital television 102 is established (S811).

Then, the smartphone 101 transmits a service information acquisition request message to the digital television 102 (S812) similarly to the processing in S802, and the smartphone 101 receives a service information acquisition response message from the digital television 102 (S813) similarly to the processing in S803. If UUID included in the service information acquisition response message is different from UUID received in S803, it may be recognized that the partner apparatus of the NFC communication 104 is not the digital television 102, and the processing may be returned to the processing in S811 again. Also, at this time, the display unit 201 may provide displaying (a display) for urging the user to cause the smartphone 101 to approach the digital television 102 to establish the NFC communication 104.

Further, the smartphone 101 transmits a service start request message to the digital television 102 by the NFC communication unit 208 (S814), receives a service start response message from the digital television 102 (S815), and ends the processing (S816). The service start request message transmitted in this case is a message including at least identifier information of a service included in the service information acquisition response message received from the printer 103 in S806. As described above, the service start request message may include additional information of the service, information of a wireless communication interface, information indicative of a time-out time, information indicative of whether secondary distribution is executable or not, and the like, in addition to the identifier of the service. After the processing in S815, the smartphone 101 may delete information relating to the service stored in the storage unit 203. Alternatively, control may be made such that other apparatus is not notified about the content of the service information acquisition response message. After the processing in S815, whether the processing is returned to the processing in S811 or not may be switched in accordance with the information indicative of whether the second distribution is executable or not included in the service information acquisition response message received from the printer 103. By the processing in S811 to S816, if the printer 103 cannot execute the service requested by the digital television 102, the digital television 102 may be notified about that the printer 103 cannot execute the service requested by the digital television 102 as error processing.

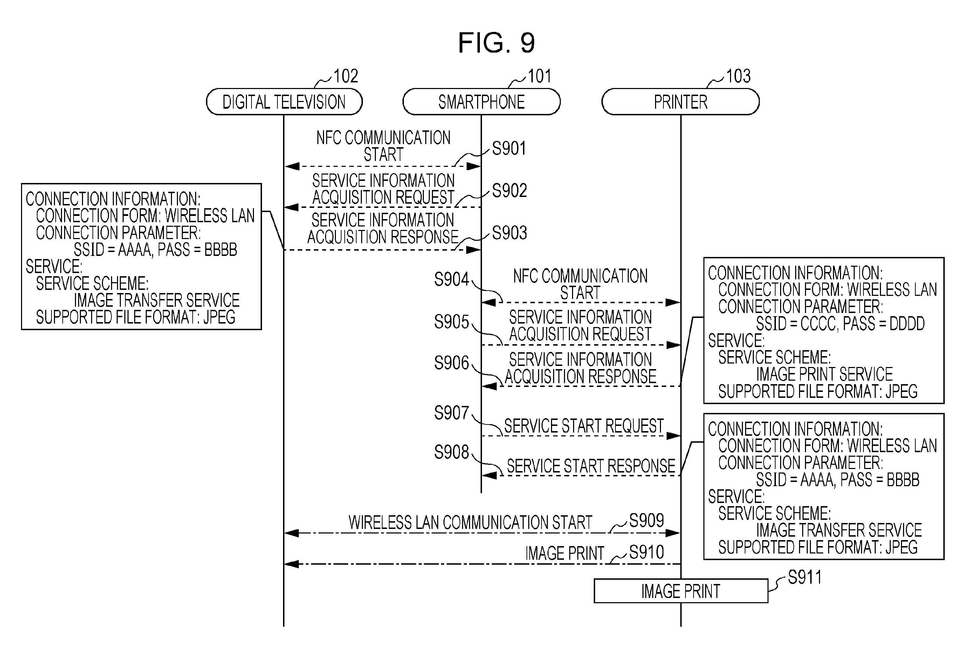

Next, an example of a communication sequence among the smartphone 101, the digital television 102, and the printer 103 is described in detail with reference to Fig. 9. In Fig. 9, NFC communication is established between the smartphone 101 and the digital television 102 first in response to a user operation of causing the smartphone 101 to approach the digital television 102 (S901). Then, the smartphone 101 transmits a service information acquisition request message to the digital television 102 by the NFC communication (S902), and receives a service information acquisition response message from the digital television 102 (S903). Information representing an "image transfer service" scheme for transferring a JPEG file by wireless LAN communication as a service that can be provided or used by the digital television 102 is added to the service information acquisition response message. At this time, the digital television 102 becomes (enters) a waiting state for the wireless LAN connection from the printer 103. Next, the smartphone 101 disconnects the NFC communication with the digital television 102, and then NFC communication is established between the smartphone 101 and the printer 103 in response to a user operation of causing the smartphone 101 to approach the printer 103 (S904). Then, the smartphone 101 transmits a service information acquisition request message to the printer 103 by the NFC communication (S905), and receives a service information acquisition response message from the printer 103 (S906). Information representing an "image print service" scheme for transferring and printing a JPEG file by wireless LAN communication as a service that can be provided or used by the printer 103 is added to the service information acquisition response message. Further, the smartphone 101 transmits a service start request message to the printer 103 (S907), and receives a service start response message from the printer 103 (S908). Information representing an "image transfer service" scheme for transferring a JPEG file by the wireless LAN communication provided by the digital television 102 received from the digital television 102 in S903 is added to the service start request message. Also, information indicative of whether the "image transfer service" scheme is executable or not in the printer 103 is added to the service start response message. Then, the printer 103 executes connection for the wireless LAN communication with the digital television 102 based on a connection parameter (S909). The digital television 102 executes the "image transfer service" and transmits image data to the printer 103 through the wireless LAN communication 105 (S910). The printer 103 executes printing of the image file acquired through the wireless LAN communication 105 (S911).

As described above, with the embodiment, since the information relating to the service is added to the service information acquisition response message and the service start request message, the information of the service can be shared between the apparatuses that execute the service before the wireless LAN communication is established. Also, since the information relating to the service is shared between the apparatuses before the wireless LAN communication is established, if the communication partner is not compliant with the desired service, the establishment processing of the wireless LAN communication can be restricted. Hence, the connection processing for wireless LAN or Bluetooth (registered trademark) can be executed only if required. Also, in general, since the connection processing for wireless LAN takes a time of several seconds to several tens of seconds, if the unnecessary connection processing is restricted, the waste of time can be omitted. Also, the service can be started between the apparatuses only by the operation of causing the relay apparatus to approach at least two apparatuses that execute services. Also, since the relay apparatus acquires UUID from the apparatus that executes the service, operability can be increased by detecting that the user incorrectly causes the relay apparatus to approach an apparatus irrelevant to the service and notifying the user about the detection. Also, since the relay apparatus acquires the information relating to the time-out time from the apparatus that executes the service, the operability can be increased by detecting that the partner apparatus, which has made the NFC communication first, stops provision of the service and notifying the user about the detection. Also, since the relay apparatus provides control so that the information relating to the service is deleted or prevented from being transmitted to other apparatus when the processing is normally ended or when an error occurs, leakage of the information or execution of the service by an outsider can be prevented, and hence security can be increased.

### Second Embodiment

In the first embodiment, the method of sharing the service information between the apparatuses by the NFC communication using the relay apparatus has been a method of transferring information relating to a service from one apparatus to other apparatus by two-time NFC communication. The embodiment has been exemplified, in which, with this method, the relay apparatus notifies the partner apparatus of the second NFC communication about the service provided by the partner apparatus of the first NFC communication, and the service is executed between the apparatuses. Hereinafter, as a second embodiment, a method of transferring service information by three-time NFC communication is exemplified. The configuration and flowchart of a communication system in this embodiment are identical with those of the first embodiment.

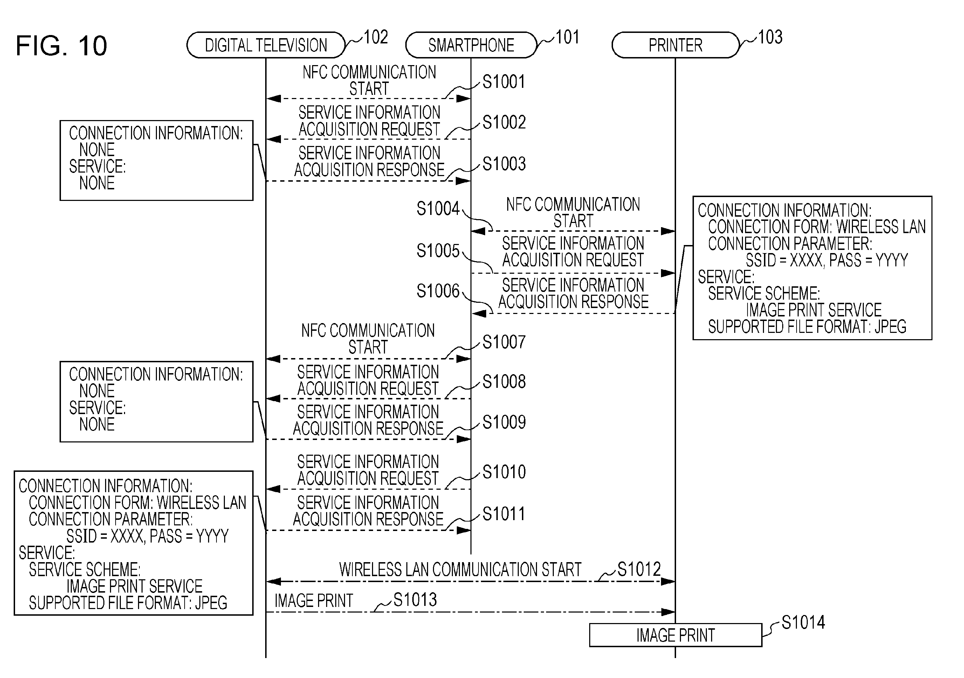

Hereinafter, an example of a communication sequence among the smartphone 101, the digital television 102, and the printer 103 is described in detail with reference to Fig. 10. In Fig. 10, NFC communication is established between the smartphone 101 and the digital television 102 first in response to a user operation of causing the smartphone 101 to approach the digital television 102 (S1001). Then, the smartphone 101 transmits a service information acquisition request message to the digital television 102 by the NFC communication (S1002), and receives a service information acquisition response message from the digital television 102 (S1003). Information relating to the service is not added to the service information acquisition response message (so there is no service information in the service information acquisition response message). Then, NFC communication is established between the smartphone 101 and the printer 103 in response to a user operation of causing the smartphone 101 to approach the printer 103 (S1004). Then, the smartphone 101 transmits a service information acquisition request message to the printer 103 by the NFC communication (S1005), and receives a service information acquisition response message from the printer 103 (S1006). Information representing an "image print service" scheme for printing a JPEG file by wireless LAN communication as a service that can be provided or used by the digital television 102 is added to the service information acquisition response message. At this time, the printer 103 becomes (enters) a waiting state for the wireless LAN connection from the digital television 102, and the display unit 201 provides displaying (a display) for urging a user operation to cause the printer 103 to approach the digital television 102. Then, NFC communication is established between the smartphone 101 and the digital television 102 in response to a user operation of causing the smartphone 101 to approach the digital television 102 (S1007). Then, the smartphone 101 transmits a service information acquisition request message to the digital television 102 again by NFC communication (S1008), and receives a service information acquisition response message from the digital television 102 (S1009). Then, the smartphone 101 transmits a service start request message to the digital television 102 again by the NFC communication (S1010), and receives a service start response message from the digital television 102 (S1011). Information representing that the JPEG file is to be printed by the wireless LAN communication by using the "image print service" scheme provided by the printer 103 received from the printer 103 in S1005 is added to the service start request message. Also, information indicative of whether the "image print service" scheme is executable or not in the digital television 102 is added to the service start response message. Then, the digital television 102 executes connection for the wireless LAN communication with the printer 103 (S1012). Then, the "image print service" is executed for the printer 103 and transmits a print request including image data (S1013), and the printer 103, which has received the print request, executes printing of the image file (S1014).

As described above, with this embodiment, the partner apparatus of the first NFC communication and the third NFC communication becomes able to use the service provided by the partner apparatus of the second NFC communication by the user operation for the three-time establishment of the NFC communication. Also, since the information relating to the service is shared between the apparatuses before the wireless LAN communication is established, if the communication partner is not compliant with the desired service, the establishment process of the wireless LAN communication can be restricted. Hence, the connection processing for wireless LAN or Bluetooth (registered trademark) can be executed only if required. Also, in general, since the connection processing for wireless LAN takes a time of several seconds to several tens of seconds, if the unnecessary connection processing is restricted, the waste of time can be omitted. Also, the service can be started between the apparatuses only by the operation of causing the relay apparatus to successively approach at least two apparatuses that execute services. Also, since the relay apparatus acquires UUID from the apparatus that executes the service, operability can be increased by detecting that the user incorrectly causes the relay apparatus to approach an apparatus irrelevant to the service and notifying the user about the detection. Also, since the relay apparatus acquires the information relating to the time-out time from the apparatus that executes the service, the operability can be increased by detecting that the partner apparatus, which has made the NFC communication first, stops provision of the service and notifying the user about the detection. Also, since the relay apparatus provides control so that the information relating to the service is deleted or prevented from being transmitted to other apparatus when the processing is normally ended or when an error occurs, leakage of the information or execution of the service by an outsider can be prevented, and hence security can be increased.

The above-described embodiments are merely examples, the present invention is not limited to the embodiments described in the specification and shown in the drawings, and the present invention can be modified and implemented without departing from the scope of the invention.

In the above-described embodiment, the wireless communication scheme established between the apparatuses that execute the services is a wireless LAN; however, the present invention is not limited thereto. For example, communication by Bluetooth (registered trademark) may be established.

Also, in the above-described embodiments, the connection method for the wireless LAN communication has not been specifically described, and has been described such that wireless communication is merely directly established between the apparatuses that execute the services. However, the present invention is not limited thereto. Communication may be made through an external access point, or communication may be made in an ad-hoc mode. Also, wireless LAN communication may be made between communication apparatuses through a connection procedure by Wi-Fi Direct.

Also, in the above-described embodiments, the system configuration including the smartphone 101 serving as the relay apparatus, and the digital television 102 and the printer 103 serving as the apparatuses executing the services has been described. However, the above-described processing may be executed by using other device(s). Further, the information of a service that is transmitted and received between the communication apparatuses is not limited to the information relating to image transfer and printing. For example, information relating to an image transmission service, a movie reproducing service, and an image scanning service may be transmitted and received. Also, a plurality of these services may be collectively transmitted and received.

Also, in the above-described embodiments, the identifier of a service that is transmitted and received by the NFC communication is an integer value uniquely associated with the service. However, the present invention is not limited thereto. For example, the identifier may be character string information such as the name of a service. Further, the identifier may be identification information associated with a group of a plurality of services.

Also, in the above-described embodiments, the service information acquisition response message includes the information relating to a service executable by an apparatus that executes the service. However, the service information acquisition response message may include information of (an)other service (service that cannot be executed by the relevant apparatus).

The present invention may be implemented also by executing the following processing. That is, software (program) that implements the functions of the above-described embodiments is supplied to a system or an apparatus through a network or any of various storage media, and a computer (or CPU, MPU, or the like) of the system or the apparatus reads and executes the program.

With this embodiment, the information of the service can be shared between the apparatuses.

### Other Embodiments

Embodiments of the present invention can also be realized by a computer of a system or apparatus that reads out and executes computer executable instructions recorded on a storage medium (e.g., non-transitory computer-readable storage medium) to perform the functions of one or more of the above-described embodiment(s) of the present invention, and by a method performed by the computer of the system or apparatus by, for example, reading out and executing the computer executable instructions from the storage medium to perform the functions of one or more of the above-described embodiment(s). The computer may comprise one or more of a central processing unit (CPU), micro processing unit (MPU), or other circuitry, and may include a network of separate computers or separate computer processors. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

The present invention also provides (in which the reference numbers are exemplary and non-limiting) a communication apparatus as set out in the following numbered clauses,
1. A communication apparatus (101) comprising:
   communication means for executing wireless communication by a first communication scheme;
   first receiving means for receiving first information, which relates to communication processing executable by a first other communication apparatus (102) through wireless communication by a second communication scheme being different from the first communication scheme, from the first other communication apparatus by using the communication means;
   second receiving means for receiving second information, which relates to communication processing executable by a second other communication apparatus (103) through the wireless communication by the second communication scheme, from the second other communication apparatus by using the communication means; and
   transmitting means for transmitting a connection parameter required for executing the wireless communication between the first other communication apparatus and the second other communication apparatus by the second communication scheme, and a request for the communication processing indicated by the first information from the first other communication apparatus, to the second other communication apparatus by using the communication means.
2. The apparatus according to clause 1, wherein, after the wireless communication with the first other communication apparatus for the reception by the first reception means is disconnected, if the communication apparatus is connected with the second other communication apparatus by the communication means, the second receiving means receives the second information.
3. The apparatus according to clause 1, wherein, after the wireless communication with the first other communication apparatus for the reception by the first receiving means is disconnected, if a predetermined time has elapsed, the transmitting means does not transmit the connection parameter or the request for the communication processing indicated by the first information from the first other communication apparatus.
4. The apparatus according to clause 1, wherein if the transmitting means executes the transmission to the second other communication apparatus, the transmitting means does not transmit the connection parameter or the request for the communication processing indicated by the first information from the first other communication apparatus to a third other communication apparatus.
5. The apparatus according to clause 1, wherein, if the second other communication apparatus cannot execute the communication processing indicated by the first information received by the first receiving means, error processing is executed.
6. The apparatus according to clause 1, wherein the communication means executes communication by near field communication.
7. The apparatus according to clause 1, wherein the second communication scheme is a communication scheme being compliant with IEEE 802.11 series.
8. The apparatus according to clause 1, wherein the connection parameter includes at least one of a service set identifier, an encryption key, an encryption method, an authentication key, an authentication method, a passphrase, and a media access control address.
9. The apparatus according to clause 1, further comprising:
   processing means for executing processing to cause a user to select communication processing to be executed in accordance with the reception by the first reception means and the reception by the second reception means,
   wherein the transmission means transmits a request for the communication processing selected based on the processing by the processing means to the second other communication apparatus by using the communication means.
10. The apparatus according to clause 1, further comprising:
   display control means for displaying information indicative of communication processing executable between the first other communication apparatus and the second other communication apparatus in accordance with the reception by the first reception means and the reception by the second reception means,
   wherein the transmission means transmits a request for the communication processing indicated by the information displayed by the display control means to the second other communication apparatus by using the communication means.

The present invention also provides (in which the reference numbers are exemplary and non-limiting), a control method of a communication apparatus (101) including communication means for executing wireless communication by a first communication scheme, the method comprising:
a first receiving step for receiving first information, which relates to communication processing executable by a first other communication apparatus (102) through wireless communication by a second communication scheme being different from the first communication scheme, from the first other communication apparatus by using the communication means;
a second receiving step for receiving second information, which relates to communication processing executable by a second other communication apparatus (103) through the wireless communication by the second communication scheme, from the second other communication apparatus by using the communication means; and
a transmitting step for transmitting a connection parameter required for executing the wireless communication between the first other communication apparatus and the second other communication apparatus by the second communication scheme, and a request for the communication processing indicated by the first information from the first other communication apparatus, to the second other communication apparatus by using the communication means.

The present invention also provides a program for causing a computer to execute that control method.

## Claims

1. A communication apparatus (101) comprising:
communication means (208) for executing wireless communication by a first communication scheme;
receiving means (520) for receiving first information, which relates to communication processing executable by a first other communication apparatus (102) through wireless communication by a second communication scheme being different from the first communication scheme, from the first other communication apparatus via the communication means and for receiving second information, which relates to communication processing executable by a second other communication apparatus (103) through the wireless communication by the second communication scheme, from the second other communication apparatus via the communication means; and
control means (510) for controlling the communication means to transmit a connection parameter required for executing the wireless communication between the first other communication apparatus and the second other communication apparatus by the second communication scheme, and to transmit a request for the communication processing indicated by the first information from the first other communication apparatus, to the second other communication apparatus.

2. The apparatus according to claim 1, wherein, after the wireless communication with the first other communication apparatus for the reception of the first information by the receiving means is disconnected, if the communication apparatus is connected with the second other communication apparatus by the communication means, the receiving means receives the second information.

3. The apparatus according to claim 1, wherein, after the wireless communication with the first other communication apparatus for the reception of the first information by the receiving means is disconnected, if a predetermined time has elapsed, the control means is arranged to perform control of the communication means not to transmit the connection parameter or the request for the communication processing indicated by the first information from the first other communication apparatus.

4. The apparatus according to claim 1, wherein if the control means performs control of the communication means to execute the transmission to the second other communication apparatus, the control means performs control not to transmit the connection parameter or the request for the communication processing indicated by the first information from the first other communication apparatus to a third other communication apparatus.

5. The apparatus according to claim 1, wherein, if the second other communication apparatus cannot execute the communication processing indicated by the first information received by the first receiving means, error processing is executed.

6. The apparatus according to any preceding claim, wherein the communication means executes communication by near field communication.

7. The apparatus according to any preceding claim, wherein the second communication scheme is a communication scheme compliant with IEEE 802.11 series.

8. The apparatus according to any preceding claim, wherein the connection parameter includes at least one of a service set identifier, an encryption key, an encryption method, an authentication key, an authentication method, a passphrase, and a media access control address.

9. The apparatus according to any preceding claim, further comprising:
processing means for executing processing to cause a user to select communication processing to be executed in accordance with the reception of the first and second information by the receiving means,
wherein the control means is arranged to control the communication means to transmit a request for the communication processing selected based on the processing by the processing means to the second other communication apparatus.

10. The apparatus according to any preceding claim, further comprising:
display control means for displaying information indicative of communication processing executable between the first other communication apparatus and the second other communication apparatus in accordance with the first information and the second information received by the receiving means,
wherein the control means is arranged to control the communication means to transmit a request for the communication processing indicated by the information displayed by the display control means to the second other communication apparatus by using the communication means.

11. A control method of a communication apparatus (101) including communication means (208) for executing wireless communication by a first communication scheme, the method comprising:
a first receiving step (S803) of receiving first information, which relates to communication processing executable by a first other communication apparatus (102) through wireless communication by a second communication scheme being different from the first communication scheme, from the first other communication apparatus via the communication means;
a second receiving step (S806) of receiving second information, which relates to communication processing executable by a second other communication apparatus (103) through the wireless communication by the second communication scheme, from the second other communication apparatus via the communication means; and
a transmitting step (S808) of transmitting a connection parameter required for executing the wireless communication between the first other communication apparatus and the second other communication apparatus by the second communication scheme, and a request for the communication processing indicated by the first information from the first other communication apparatus, to the second other communication apparatus via the communication means.

12. A program which, on execution by a programmable communication apparatus, causes the communication apparatus to execute the control method according to claim 11.
